# EUROPEAN PATENT SPECIFICATION

(11) **EP 0 976 534 B1**
(45) Date of publication and mention of the grant of the patent: **01.10.2003**
(21) Application number: 99114597.0
(22) Date of filing: 26.07.1999
(51) Int. Cl.: B29D 30/06

(54) **A process for manufacturing, moulding and curing tyres for vehicle wheels**
Verfahren zum Herstellen, Formen und Vulkanisieren von Fahrzeugreifen
Procédé pour la confection, le moulage et la vulcanisation de pneus pour véhicule

(30) Priority: 31.07.1998 EP 98830473; 20.11.1998 EP 98830696
(43) Date of publication of application: 02.02.2000
(60) Divisional application: 03016870.2
(73) Proprietor: PIRELLI PNEUMATICI Società per Azioni, 20126 Milano (IT)
(72) Inventor: Caretta, Renato, 21013 Gallarate (Varese) (IT); Bette, Christiano, 20139 Milano (IT)
(74) Representative: Tansini, Elio Fabrizio

(56) References cited:
- WO-A-98/42499
- DE-C- 355 909
- GB-A- 397 508
- US-A- 2 795 262
- US-A- 3 143 449
- US-A- 3 769 122
- US-A- 4 221 253

## Description

The present invention relates to a process for manufacturing, moulding and curing tyres for vehicle wheels. More particularly, the present invention relates to a process for manufacturing, moulding and curing tyres for vehicle wheels in which provision is made for admission of a fluid under pressure directly in contact with the green tyre, i.e. in the absence of a vulcanization bladder.

In a cycle for vehicle wheel tyre production it is provided that, subsequently to a manufacturing process in which the different tyre components are made and assembled, a moulding and curing process should be carried out for the purpose of giving the green tyre a desired geometrical conformation and a particular tread pattern, and subsequently stabilizing this conformation by vulcanization of the elastomer material forming the tyre itself.

For this purpose, the green tyre is enclosed in a moulding cavity defined within a vulcanization mould and the shape of which matches that of the outer surface of the tyre to be obtained.

Within the scope of the present description, by "green tyre" it is intended the product which is obtained after the manufacturing step in which the different tyre components are assembled and the elastomer material has not yet been submitted to curing. By "outer surface" it is intended the tyre surface which is in sight once said tyre has been mounted on the wheel rim, whereas by "inner surface" it is intended the tyre surface which is in contact with the inflating fluid of the tyre itself.

In one of the most widespread moulding methods it is provided that a vulcanization bladder made of rubber inflated with steam and/or another high-pressure heated fluid should be inserted into the green tyre enclosed in the moulding cavity. In this manner the tyre is conveniently pressed against the inner walls of the moulding cavity and strengthened into the geometric conformation imposed thereto, as a result of the cross-linking process to which the elastomer material forming the tyre itself is submitted. Cross-linking is carried out by virtue of heat supply transferred from steam through the bladder, as well as from the mould walls.

Since the vulcanization bladder is a deformable element due to its own nature, its use involves several drawbacks such as geometric imperfections in the tyre as a result of possible distortions undergone by the bladder itself, formation of flashes, in particular at the beads, due to undesired escaping of part of the elastomer material at the starting instants of the vulcanization process. In addition, thermal inertia typical of the material forming the vulcanization bladder represents a hindrance to heat transfer to the tyre by the fluid admitted to the bladder itself.

Also known are curing methods in which steam or another heating fluid under pressure is directly admitted to the inside of the tyre enclosed in the moulding cavity, in the absence of vulcanization bladder. Moulding methods without the aid of the above mentioned vulcanization bladders are described, e.g., in US patent Nos. 4,236,883, 4,400,342, 5,127,811 and 5,597,429.

In accordance with other moulding methods it is provided that, in place of the inflatable vulcanization bladder, a rigid toroidal support having the same configuration as the inner surface of the tyre to be obtained should be arranged within the tyre itself. For instance, such a method is described in European Patent EP-242,840 in which a rigid toroidal support is employed for imposing the final shape and sizes to the tyre enclosed in the mould. According to the above patent disclosure, the different thermal-expansion coefficient between the metallic toroidal support and the elastomer material of which the green tyre is made is utilized for achieving an appropriate moulding pressure.

However, the process described in patent EP-242,840 presents many drawbacks in its practical accomplishment. First of all, a very precise and also very difficult control of the volumes of the material employed in manufacturing the tyre is required. Besides, it is not possible that an appropriate radial and/or circumferential expansion should be imposed to the tyre, for instance in order to achieve desired preloading effects in the reinforcing structures employed in making the same. Finally, obtaining a correct and efficient heat transmission to the tyre inside is rather difficult.

In the co-pending European patent application No. 98830473.9, filed on July 31, 1998 in the name of the same Applicant, a moulding and curing process for a tyre with the aid of a rigid toroidal support is described, in which the necessary pressing of the raw elastomer material against the mould walls is carried out through the admission of a fluid under pressure into a diffusion interspace created between the inner surface of the green tyre and the outer surface of the toroidal support. In this way, during the pressing step a radial expansion is imposed to the tyre by effect of the pressurized-fluid admission, with an increase in the tyre circumference included between 1.5% and 2.5%, measured at an equatorial plane of the tyre itself. The pressurized-fluid admission is preferably carried out by means of feeding channels formed in the toroidal support and terminating at the outer surface of the latter. During the pressurized-fluid admission, the tyre is sealingly engaged at its circumferential inner edges, between the walls of the moulding cavity and the outer surface of the toroidal support, so as to hermetically delimit the diffusion interspace at the circumferential inner edges of the tyre itself. Advantageously, the admission of heat necessary for vulcanization takes place by admission of a heating fluid into the diffusion interspace. This heating fluid may form or at least be part of the same fluid under pressure utilized for carrying out the pressing step.

US 2,795,262 discloses a method for forming a pneumatic tyre carcass which comprises applying to the uncured inner surface of a carcass a continuous film of a silicone polymer elastomer and then vulcanising the tyre in a confining mould while applying internal pressure by a fluid in direct contact with such a film. The silicone elastomer prevents fluid permeation into the green tyre. Such elastomer, however, is highly incompatible with the rubber material constituting the green tyre. This results in the need to use adhesion promoters to avoid detachment of the layer of silicone from the cured tyre, otherwise a step of removing the said material from the tyre must be foreseen. The problem of compatibility is particularly felt when a tubeless tyre is produced, because poor adhesion of the layer could negatively affect the fitting of the tyre on the rim of the wheel with consequent poor air tightness.
Moreover the silicone material proposed by Frank is less readily curable than the material constituting the other parts of the green tyre. This results in the necessity of a long pre-vulcanisation step of the silicone material layer, carefully carried out in order to avoid undesired vulcanisation of the other materials of the green tyre, before the curing step in a mould.

The German Patent DE 355,909 discloses a process for manufacturing tyres in which a liquid under pressure is placed in direct contact with the inner surface of the tyre before or during vulcanisation. Before vulcanisation, an inner layer of the tyre is treated so that it becomes impermeable to said liquid. Said treatment is carried out by partial vulcanisation of the layer(s) which form(s) the above mentioned inner layer, before or after the other layers which form the tyre are superimposed. The composition of said inner layer is not described.

US 3,769,122 discloses a method for forming a tubeless pneumatic tyre innerliner which involves applying to the entire inner surface of its tire carcass, a continuous, sprayable, self-curable rubber cement coating of butyl rubber or halogenated butyl rubber having a viscosity average molecular weight between about 28,000 and about 285,000, and having fillers and curatives to a total solids content of between about 20 to about 80 percent by weight.

US 4,221,253 discloses a process for producing a tyre containing components at least two of which are layers of elastomeric material and at least one of which is curable by electron irradiation, which process comprises partially curing at least a portion of one layer by exposure to electron irradiation or other radiation having the same curing effect on the rubber, and assembling the partially cured elastomeric material with another layer, and shaping the layers to substantially the conformation of the tyre and curing the other layer of elastomeric material.

In the Applicant's perception, processes without a vulcanization bladder as above described, in which a direct contact between the green tyre and a fluid under pressure is provided, can cause many inconveniences due to permeation of the fluid itself into the structure of the tyre not yet vulcanized. In fact the fluid permeation may, for example, either cause separations between the adjacent blend layers, or adversely interfere in the adhesion processes between the elastomer material and the metallic or textile reinforcing structures, or even promote corrosion phenomena in the metallic reinforcing materials.

In accordance with the present invention, these inconveniences are avoided by including a treatment step carried out on the inner surface of the green tyre in the tyre manufacturing process, so that said step prevents the permeation of the fluid under pressure into the tyre structure.

More particularly, the present invention therefore relates to a process for manufacturing, moulding and curing tyres for vehicle wheels, comprising the features recited in claim 1.

Further preferred features of the invention are defined in claims 2 and 3.

In the Applicant's perception, the prevulcanization degree of the layer associated with the inner surface of the tyre is suitable for obtaining a sufficient mechanical strength to diffusion and penetration of the fluid under pressure, and at the same time a high fatigue strength, in particular during the first moulding steps of the tyre, in order to avoid formation of fissures and cracks.

In more detail, the stage of treating the inner surface of the green tyre comprises the following steps: forming at least one layer of a raw elastomer material on an outer surface of a toroidal support the shape of which substantially matches that of the inner surface of the tyre; manufacturing the green tyre on the toroidal support carrying said layer of raw elastomer material; prevulcanizing the layer of raw elastomer material before introducing the green tyre into the vulcanization mould.

The formation of the layer of raw elastomeric material is achieved by applying a vulcanizable liquid composition in the form of an aqueous emulsion to the outer surface of the toroidal support.

Prevulcanization of the elastomer layer is conveniently carried out, at least partly, during manufacturing of the tyre on the toroidal support.

In more detail, prevulcanization of the elastomer layer takes place by heat transfer to the elastomer layer itself through heating of the toroidal support.

Preferably, heating of the toroidal support is at least partly achieved by means of the toroidal support itself in a previous moulding and vulcanization cycle of a tyre.

Preferably, the vulcanizing system within the aqueous emulsion is suitable for being active during the green-tyre manufacturing step.

According to a form of embodiment of the present invention, the vulcanizing system which is present in the aqueous emulsion is complete and therefore active already at the moment the primer is applied to the toroidal support.

According to an alternative embodiment of the present invention, the vulcanizing system contained in the aqueous emulsion can be activated only when it is brought into contact with the raw elastomer material constituting the innermost layer of the tyre. In this way an undesired prevulcanization of the aqueous emulsion before its application to the toroidal support is avoided. In other words, the aqueous emulsion is stable in time, so that it can be prepared and stored according to the production requirements, even a long time before its real application, this fact making the industrial accomplishment of the process easier.

According to a preferred form of embodiment, the aqueous emulsion is applied by immersion or, preferably, by spraying and subsequent evaporation of the solvent (herein, water contained in the emulsion). In this manner, a prevulcanized layer of high compactness and uniformity can be obtained with no need to use any organic solvents which, as known, can create disposal and environmental pollution problems and therefore the application of the process becames inconvenient from an industrial point of view.

After the treatment of the inner surface of the tyre has been accomplished as above described, the subsequent manufacturing, moulding and curing steps are carried out according to the known art.

Further features and advantages will become more apparent from the following detailed description of a preferred form of embodiment of the present invention. Said description will be taken hereinafter, by way of nonlimiting example, with reference to the accompanying drawings, in which:
- Fig. 1 shows a cross-sectional view of a tyre enclosed inside of a vulcanization mould;
- Fig. 2 shows a diagrammatic perspective view of an apparatus to be utilized for carrying out the stage of treating the inner surface of a tyre, for accomplishment of the process in accordance with the invention.

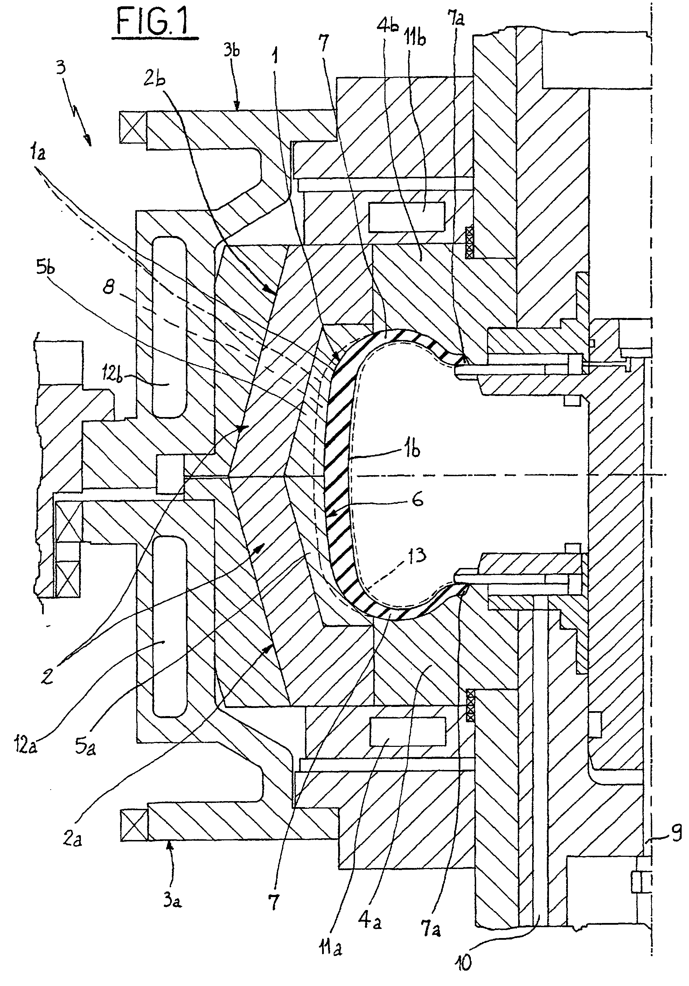

Referring particularly to Fig. 1, a tyre 1 made of raw elastomer material, previously manufactured in any manner convenient for a person skilled in the art, is enclosed in a vulcanization mould 2 associated with a vulcanization press generally indicated by reference sign 3.

In the shown example mould 2 has a lower half 2a and an upper half 2b in engagement with a bedplate 3a and a closing portion 3b of press 3 respectively.

Each of the lower 2a and upper 2b halves of mould 2 respectively presents a lower 4a and an upper 4b cheeks, and a crown of upper 5a and lower 5b sectors.

The lower 2a and upper 2b halves are movable relative to each other between an open condition, in which they are spaced apart from each other in an axial direction, and a closed position, shown in Fig. 1, in which they are close to each other so as to form a moulding cavity 6 the inner walls of which, defined by cheeks 4a, 4b and by sectors 5a, 5b, reproduce the geometric conformation of an outer surface 1a of tyre 1 to be obtained.

In more detail, cheeks 4a, 4b are designed to form the outer surfaces of opposite sidewalls 7 of tyre 1, whereas sectors 5a, 5b are designed to form the so-called tread band 8 of the tyre itself, in which a series of longitudinal and transverse cuts suitably disposed according to a desired tread pattern are created.

On closing mould 2, each of the circumferential inner edges 7a of tyre 1 is sealingly engaged against the circumferential inner portions of lower and upper cheeks 4a and 4b, for example, by means of expanding anchoring members (not shown in Fig. 1) which are obtained for example as described in US Patent 5,127,811. Thus tyre 1 will be sealingly engaged against the walls of moulding cavity 6, so as to keep outer surface 1a hermetically insulated with respect to an inner surface 1b of the tyre itself till when, the moulding and curing cycle being over, the mould itself will be brought again to its open condition.

When the closure of mould 2 has been completed, a fluid under pressure is admitted to the space defined by inner surface 1b of tyre 1, and upon the action of this fluid outer surface 1a of the tyre is pressed against the walls of moulding cavity 6 so as to cause tread band 8 to be surely and fully penetrated by the raised portions provided in sectors 5a, 5b, thereby determining the correct formation of the tread pattern on the tyre.

Concurrently with the admission of the fluid under pressure, the administration of heat to tyre 1 is carried out so as to cause the cross-linking of the elastomer material said tyre is made of.

Administration of heat to the green tyre 1 is advantageously accomplished by admission of a heating fluid, preferably steam under pressure. In conclusion, the heating fluid consists of, or at least comprises, the same fluid under pressure which is employed during the pressing step of outer surface 1a of green tyre 1 against moulding cavity 6.

Admission of the steam or of another heating fluid under pressure can be carried out for example via one or more supply channels 9, 10 arranged inside of vulcanization press 3 and opening into moulding cavity 6.

Further steam under pressure can be admitted to cavities 11a, 11b, 12a, 12b formed close to respective cheeks 4a, 4b and sectors 5a, 5b to cause heat transmission from outside of tyre 1, through the walls of mould 2.

The process in accordance with the invention involves the execution of a preliminary stage of treating inner surface 1b of tyre 1 before the latter is introduced into mould 2, or in any case before the admission of the heating fluid under pressure to the inside of the tyre itself.

In more detail, said treatment is put into practice by associating at least one layer of prevulcanized elastomer material, approximatively represented by dashed line 13 in Fig. 1, with inner surface 1b of tyre 1.

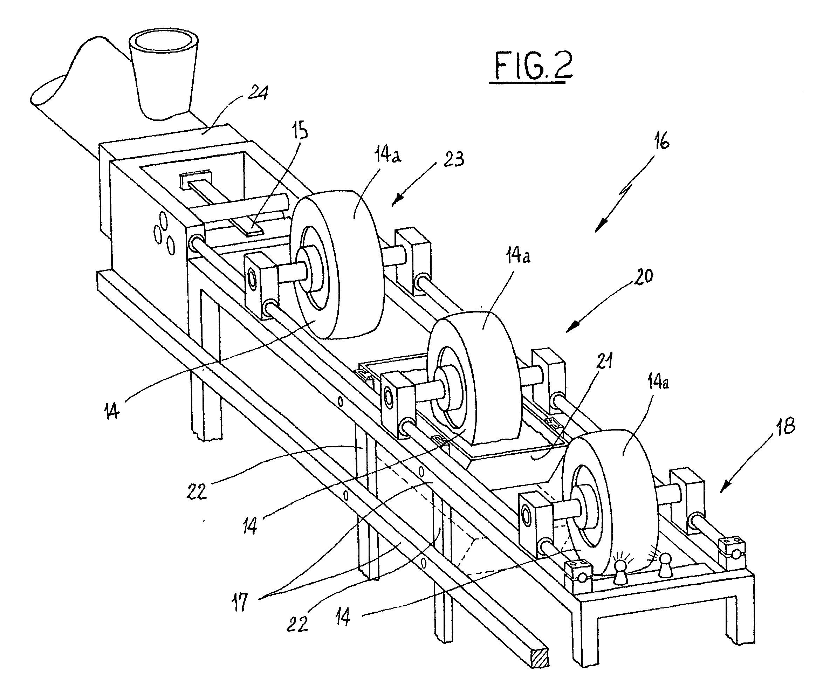

Particularly referring to Fig. 2, the stage of treating inner surface 1b is preferably accomplished as a preliminary step of a manufacturing process of tyre 1 on a toroidal support 14, for example said manufacturing process being carried out as diclosed in the European patent applications No. 97830633.0 or No. 97830731.2, in the name of the same Applicant, according to which the formation and/or assembling of the different tyre components, such as carcass plies, bead reinforcing structures, belt layers, sidewalls and tread band, is directly carried out on a rigid toroidal support the shape of which substantially matches the shape of the inner surface of the tyre to be obtained.

According to the invention, the treatment of inner surface 1b of tyre 1 can therefore be accomplished by forming or applying an outer surface 14a of toroidal support 14 at least one layer of elastomer material in the form of an aqueous emulsion that, during the following tyre manufacturing steps, is prevulcanized until it reaches such a prevulcanization degree, on introduction of tyre 1 into vulcanization mould 2, that the permeation of the heating fluid under pressure inside of the tyre structure is efficiently prevented.

In order to achieve a sufficient degree of prevulcanization of the aqueous emulsion before tyre 1 is introduced into the mould, it is convenient that the elastomer-material mixture which forms the prevulcanized layer is formulated in order to achieve the cross-linking at relatively low temperatures, approximatively not exceeding 150°C, and preferably included between 80° and 120°C, during a period of time not longer than 45 minutes, and preferably included between 20 and 35 minutes.

In order to achieve said result, the aqueous emulsion comprises a polymeric base and a vulcanizing system as hereinafter described.

As a polymeric base, a polymer can be employed which is selected from: natural rubber (NR), epoxy natural rubber (ENR), chloroprene, acrylonitrile-butadiene copolymers (NBR), halogenated butyl rubber (XIIR) (in particular chlorobutyl or bromobutyl rubber), styrene-butadiene copolymer (SBR), isobutilene/p-methyl-styrene copolymers halogenated isobutylene/p-methyl-styrene copolymers, polybutadiene, or mixtures thereof. More particularly, the polymeric base is preferably selected from: styrene/butadiene copolymers, chloroprene, natural rubber, acrylonitrile-butadiene copolymers or mixtures thereof, for instance a mixture between SBR and NR, with a ratio by weight of SBR/NR generally included between 80:20 and 20:80.

Preferably, the aqueous emulsion is, for instance, obtained by mixing the polymeric base in the form of latex with the vulcanizing system, in the presence of surfactants, in order to stabilize the emulsion, and optionally of antisettling agents. Products known in the art for latex stabilization, such as fatty acid salts, alkyl sulfonates and the like can be employed as surfactants. The amount of the polymeric base which is present in the emulsion is generally included between 20 and 60% by weight, preferably between 30 and 50% by weight.

The vulcanizing system comprises at least one vulcanization accelerator selected in the group comprising: dithiocarbamates, thiourames, thiazole compounds, or mixtures thereof.

As vulcanization accelerator, a mixture is particularly preferred which comprises: 1 to 20 phr, preferably 2 to 15 phr, of a dithiocarbamate or thiourame; 0.5 to 10 phr, preferably 1 to 5 phr, of a thiazole compound (phr = parts by weight based on 100 parts by weight of rubber).

In order to further increase the vulcanization speed and/or to decrease the temperature necessary for achieving a sufficient prevulcanization degree, the above stated vulcanization accelerators can be advantageously added with a nitrogen-containing co-accelerator selected for example from the group comprising: N-cyclohexyl-N-ethylamine, diphenylguanidine, and the like, in amounts generally included between 2 and 15 phr, preferably between 5 and 10 phr.

Among dithiocarbamates N,N-dialkyl-dithiocarbamates and zinc, bismuth, cadmium, lead, copper, selenium, tellurium or iron N-alkyl-N-aryl-dithiocarbamates such as: zinc N-phenyl-N-ethyl-dithiocarbamate, zinc N,N-diethyl-dithiocarbamate and the like or mixtures thereof are particularly preferred.

Among the thiazole compounds 2-mercaptobenzothiazole (MBT), 2-mercaptobenzothiazole disulfide (MBTS), N-cyclohexyl-2-benzothiazyl-sulfenamide (CBS), 2-dicyclohexyl-benzothiazyl-sulfenamide (DCBS), N-terbutyl-2-benzothiazyl-sulfenamide (TBBS), N-morpholine-2-benzothiazyl-sulfenamide (MBS), N-terbutyl-dithiobenzothiazole (TBSI) and the like, or mixtures thereof are particularly preferred.

Furthermore fillers commonly employed for sulfur-vulcanized blends such as ZnO, carbon black, kaolin, calcium carbonate, silica, silicates and the like can be added to the aqueous emulsion, as well as vulcanization adjuvants (stearic acid, for example), antioxidants, stabilizers and the like.

In order to avoid that the elastomer material which is employed for forming prevulcanized layer 13 is spontaneously cross-linked before its application to toroidal support 14, preferably sulfur, which is one of the essential components for the vulcanization process, is not added to the aqueous emulsion. In this way, the prevulcanization of the aqueous emulsion layer only takes place when the latter is brought into contact with a sulfur-containing vulcanizable mixture, such as the liner one. In fact, the sulfur amount present at the aqueous emulsion/liner interface is deemed to be enough for obtaining a sufficient pre-crosslinking degree of the aqueous emulsion which is capable of enabling the waterproofing of inner surface 1b of tyre 1.

In the case of an aqueous emulsion containing a complete vulcanizing system, a typical composition is the following:

| Component | phr |
|---|---|
| SBR/NR | 100 |
| (ratio by weight 70:30 on the dry part) | |
| Carbon black | 5 |
| Kaolin | 10 |
| ZnO | 0.05 |
| 2-mercaptobenzothiazole | 0.1 |
| Zinc N, N-diethyl-dithiocarbamate | 0.1 |
| Potassium caseinate | 0.5 |
| Potassium oleate | 0.5 |
| Sulfur | 0.5 |
| 6-PPD | 2 |

As stated above, after aqueous emulsion application and solvent evaporation, a layer of liner, usually in the form of a thin sheet 15 is preferably applied to the material layer thus obtained in order to cover outer surface 14a of toroidal drum 14.

The liner composition can be selected from those known in the art for this type of tyre element. For instance as a polymer base a butyl rubber can be employed, in particular an isobutene/isoprene or an isobutene/p-methyl-styrene copolymer, either in a halogenated form or not. Preferably, the butyl rubber is employed in a halogenated form, optionally mixed with natural rubber (NR), optionally an epoxy natural rubber (ENR), or with a non halogenated butyl rubber. As a vulcanizing system for the liner, for instance sulfur mixed with a thioazole accelerator, for example selected from those stated above, may be used.

As previously shown, in order to improve co-vulcanization between prevulcanized layer and inner surface of the tyre, an intermediate layer comprising a vulcanizable composition of the same formulation as that of the liner can be provided for the application over the aqueous emulsion layer and before the application of the liner itself.

A typical composition for the intermediate layer is the following:

| Component | phr |
|---|---|
| Bromobutyl rubber | 100 |
| Carbon black | 60 |
| ZnO | 2 |
| Stearic acid | 1 |
| sulfur | 1 |
| MBTS | 2 |
| Aromatic oil | 10 |
| 6-PPB | 0.5 |

Application of the intermediate layer can be achieved for example by rotation of toroidal drum 14, previously treated with the aqueous emulsion, said toroidal drum 14 having its lower part dipped in the solution intended for constituting the intermediate layer itself, and by subsequent solvent evaporation.

For instance, in Fig. 2 is schematically shown an apparatus 16 suitable for forming prevulcanized layer 13 in accordance with the process of the present invention.

Said apparatus 16, which can be conveniently integrated into a tyre manufacturing line, comprises a guide structure 17 along which, by any means convenient for a person skilled in the art, one or more toroidal supports 14, on each of which a respective tyre 1 is going to be formed, are caused to move forward according to a stepping movement.

Along guide structure 17, each toroidal support 14 encounters a first application station 18 at which the aqueous emulsion, is supplied to one or more delivery nozzles 19, or equivalent means, in order to be uniformey applicated by spraying to outer surface 14a of the toroidal support itself, which is driven in rotation in any manner convenient for a person skilled in the art.

As shown in Fig. 2, the aqueous emulsion that is present in solution lends itself to be fed to delivery nozzles or equivalent means so as to obtain the uniform application of the same to outer surface 14a of the toroidal support 14 by spraying and subsequent evaporation of the aqueous solvent, which can be advantageously promoted by heat transfer through toroidal support 14.

To this aim, toroidal support 14 can be submitted to a pre-heating step, which is for instance obtained with the aid of infrared rays. Alternatively, the pre-heating of toroidal support 14 can be achieved through introduction of the same into moulding cavity 6 during a preceding moulding and curing cycle of another tyre. Furthermore in this manner the whole apparatus inclusive of vulcanization press 3 and toroidal support 14 can be better utilized as regards heat exploitation.

Downstream of the first application station toroidal drum 14 encounters a possible intermediate station 20 for the application of the above mentioned intermediate layer. In this intermediate station 20, a tank 21 movable on vertical guides 22 and holding the liner components in solution is moved up under toroidal support 14 until the latter is at least partly dipped in the solution itself.

Following to the rotation imposed to drum 14, an uniform application of the liner components in solution to outer surface 14a of the toroidal support itself is obtained.

In this case too, the quick evaporation of the solvents is caused concurrently with the transfer of toroidal support 14 to a second application station 23 where the application of the liner in the form of a thin sheet 15 is carried out.

Thin sheet 15 (liner) can for example come from an extrusion unit 24 placed at second application station 23, so that it lends itself to be applied to cover outer surface 14a of toroidal support 14 immediately after emerging from the extrusion unit.

When application of liner thin sheet 15 has been completed, toroidal support 14 is removed from second application station 23 so as to be submitted, by subsequent transfers to corresponding work stations (not shown as not relevant for the purposes of the invention), to a sequence of operating steps which are provided in the tyre manufacturing process.

During the tyre manufacture, aqueous emulsion layer 13 is submitted to the prevulcanization process, with the assistance of heat supply which is provided through the toroidal support itself.

In this case too, the heating of the toroidal support in order to transfer heat to aqueous emulsion layer 13 can be achieved by infrared rays or equivalent means, such as electric resistors arranged in the toroidal support itself.

As previously described, if the introduction of toroidal support 14 into moulding cavity 6 together with the tyre being worked is provided, the heating of the toroidal support can also be obtained, at least partly, as a result of its use in a moulding and curing cycle which has been previously carried not on another tyre.

To the aims of the present invention, in the Applicant's opinion the prevulcanization degree given to aqueous emulsion layer 13 is sufficient if it is able, at the end of tyre 1 manufacturing process and at all events on introduction of the tyre into vulcanization mould 2, to obtain an imperviousness to steam, or to another heating fluid which is employed, until a pressure of at least 3 bars, preferably of at least 5 bars.

The Applicant has in fact ascertained that the most critical step in connection with spreading of the heating fluid within the elastomer material forming tyre 1 appears at the starting instants of the fluid admission inside of the tyre, when the pressure exerted by the heating fluid is relatively low (generally lower than 5 bars) and the cross-linking degree of the elastomer material forming the tyre is still poor.

On increasing of the heating-fluid pressure, the elastomer material undergoes a kind of compacting, by effect of pressure itself, thereby increasing the the resistance to heat diffusion offered by the material.

Therefore due to the presence of prevulcanized layer 13, steam or any other heating fluid is prevented from penetrating into the whole structure of tyre 1, exactly during the most critical steps of the vulcanization process.

Thus any oxidation problem of the metal structures employed in the tyre, due to permeation of the steam through the tyre itself and/or to formation of gas bubbles when inert gases are employed in addition to or in place of the steam, is eliminated.

Toroidal support 14 which is employed in the previously described example can be removed from tyre 1 before its introduction into mould 2. Alternatively, the toroidal support 14 can be left within tyre 1, for example for carrying out a vulcanization process as described in the above mentioned co-pending European patent application No. 98830473.9 according to which the heating fluid is admitted to an interspace defined between the outer surface of the toroidal support itself and the inner surface of the tyre.

The absence of any rigid or substantially rigid element in contact with the inner surface of the tyre during the vulcanization process offers the advantage of obtaining a finished tyre with a perfectly smooth and uniform inner surface, without any marks and/or unevennesses typically left by the vulcanization bladders or the toroidal drums employed in the known art. Furthermore, the inner surface of the tyre is covered with prevulcanized layer 13 that, when the vulcanization is over, helps in making the tyre airtight.

## Claims

1. A process for manufacturing, moulding and curing tyres for vehicle wheels, comprising the following steps:
- manufacturing a green tyre (1) comprising a raw elastomer material;
- closing the green tyre (1) into a moulding cavity (6) defined in a vulcanization mould (2), said moulding cavity (6) having walls the shape of which matches the shape of an outer surface (1a) of the tyre (1) when the vulcanization has been completed;
- admitting a fluid under pressure to the space defined by an inner surface (1b) of the tyre (1) in order to press the outer surface (1a) of the green tyre against the walls of the moulding cavity (6);
- administering heat to the tyre (1) for producing the vulcanization of the raw elastomer material; wherein before the stage of admitting the fluid under pressure, a treatment stage of the inner surface (1b) of the green tyre (1) is achieved to provide said inner surface with a treatment adapted to prevent permeation of fluid under pressure into the inside of the tyre itself,
**characterized in that** said treatment comprises the application of at least one layer (13) of an elastomer material in the form of an aqueous emulsion said elastomer material comprising a vulcanising system and a polymeric base selected among natural rubber, epoxy natural rubber, chloroprene, acrylonitrile-butadiene copolymers, halogenated butyl rubber, styrene-butadiene copolymers, isobutylene/p-methyl-styrene copolymers, halogenated isobutylene/p-methyl-styrene copolymers, polybutadiene, or mixtures thereof.

2. The process of claim 1, wherein the vulcanizing system comprises dithiocarbamates, thiourames, thiazole compounds, or mixtures thereof.

3. The process of claim 2, wherein the vulcanization systems further comprises N-cyclohexyl-N-ethylamine or diphenylguanidine.

4. A process as in claim 1, wherein the stage of treating the inner surface (1b) of the green tyre (1) comprises the following steps: forming said at least one layer (13) of a raw elastomer material on an outer surface of a toroidal support (14) the shape of which substantially matches the shape of the inner surface (1b) of the tyre; manufacturing the green tyre (1) on the toroidal support (14) carrying said layer (13) of raw elastomer material; prevulcanizing the layer (13) of raw elastomer material before introducing the green tyre (1) into the vulcanization mould (2).

5. A process as in claim 4, wherein the prevulcanization of the elastomer layer (13) is carried out, at least partly, during the manufacturing of the tyres (1) on the toroidal support (14).

6. A process as in claim 5, wherein the prevulcanization of the elastomer layer (13) takes place by heating the toroidal support (14).

7. A process as in claim 6, wherein the heating of the toroidal support (14) is at least partly achieved following to the use of the toroidal support (14) in a previous moulding and vulcanization cycle of a tyre (1).

8. A process as in claim 1, wherein the vulcanizing system within the aqueous emulsion is capable of being active during the green-tyre manufacturing step.

9. A process as in claim 8, wherein the vulcanizing system which is present in the aqueous emulsion is complete and therefore active already at the moment the aqueous emulsion is applied to the toroidal support (14).

10. A process as in claim 8, wherein the vulcanizing system which is contained in the aqueous emulsion can be activated only when it is brought into contact with the raw elastomer material constituting the innermost layer of the tyre (1).

## Patentansprüche

1. Verfahren zumHerstellen, zum Ausformen und zum Härten von Reifen für Fahrzeugräder mit den folgenden Schritten:
- Herstellen eines Rohreifens (1), der ein Rohelastomermaterial aufweist,
- Einschließen des Rohreifens (1) in einen in einer Vulkanisierform (2) ausgebildeten Formhohlraum (6), der Wände aufweist, deren Form der Form einer Außenfläche (1a) des Reifens (1) entspricht, wenn die Vulkanisierung abgeschlossen ist,
- Zuführen eines Druckfluids zu dem von einer inneren Fläche (1b) des Reifens (1) gebildeten Raum, um die äußere Fläche (1a) des Rohreifens gegen die Wände des Formhohlraums (6) zu drücken,
- Aufbringen von Wärme auf den Reifen (1) zur Erzeugung der Vulkanisierung des Rohelastomermaterials,
- wobei vor dem Schritt der Zuführung des Druckfluids ein Behandlungsschritt der inneren Fläche (1b) des Rohreifens (1) erreicht wird, um für die innere Fläche eine Behandlung bereitzustellen, die geeignet ist, das Durchdringen des Druckfluids in die Innenseite des Reifens zu verhindern,
**dadurch gekennzeichnet,**
- **dass** die Behandlung das Aufbringen von wenigstens einer Schicht (13) eines elastomeren Materials in Form einer wässrigen Emulsion aufweist, wobei das elastomere Material ein Vulkanisiersystem und eine polymere Basis, ausgewählt aus natürlichem Kautschuk, natürlicher Epoxykautschuk, Chloropren, Acrylnitril-Butadien-Copolymeren, halogeniertem Butylkautschuk, Styrol-Butadien-Copolymeren, lsobutylen-/p-Methyl-Styrol-Copolymeren, halogeniertem lsobutylen-/p-Methyl-Styrol-Copolymeren, Polybutadien oder Mischungen davon aufweist.

2. Verfahren nach Anspruch 1, bei welchem das Vulkanisiersystem Dithiocarbamate, Thiurame, Thiazolverbindungen oder Mischungen davon aufweist.

3. Verfahren nach Anspruch 2, bei welchem die Vulkanisiersysteme weiterhin N-Cyclohexyl-N-Ethylamin oder Diphenylguanidin aufweisen.

4. Verfahren nach Anspruch 1, bei welchem der Schritt der Behandlung der inneren Fläche (1b) des Rohreifens (1) die folgenden Schritte aufweist:
- Ausbilden der wenigstens einen Schicht (13) aus einem Rohelastomermaterial auf einer Außenfläche eines toroidförmigen Trägers (14), dessen Form im Wesentlichen der Form der inneren Fläche (1b) des Reifens entspricht,
- Herstellen des Rohreifens (1) auf dem toroidförmigen Träger (14), der die Schicht (13) aus Rohelastomermaterial trägt, und
- Vorvulkanisieren der Schicht (13) des Rohelastomermaterials vor dem Einführen des Rohreifens (1) in die Vulkanisierform (2).

5. Verfahren nach Anspruch 4, bei welchem das Vorvulkanisieren der elastomeren Schicht (13) wenigstens teilweise während der Herstellung des Reifens (1) auf dem toroidförmigen Träger (14) ausgeführt wird.

6. Verfahren nach Anspruch 5, bei welchem das Vorvulkanisieren der elastomeren Schicht (13) durch Erhitzen des toroidförmigen Trägers (14) erfolgt.

7. Verfahren nach Anspruch 6, bei welchem das Erhitzen des toroidförmigen Trägers (14) wenigstens teilweise auf die Verwendung des toroidförmigen Trägers (14) bei einem vorhergehenden Ausform- und Vulkanisierzyklus eines Reifens folgend erreicht wird.

8. Verfahren nach Anspruch 1, bei welchem das Vulkanisiersystem in der wässrigen Emulsion in der Lage ist, während des Rohreifen-Herstellungsschrittes aktiv zu sein.

9. Verfahren nach Anspruch 8, bei welchem das Vulkanisiersystem, das in der wässrigen Emulsion vorhanden ist, voltständig ist und deshalb bereits zu dem Zeitpunkt aktiv ist, zu dem die wässrige Emulsion auf den toroidförmigen Träger (14) aufgebracht wird.

10. Verfahren nach Anspruch 8, bei welchem das Vulkanisiersystem, das in der wässrigen Emulsion enthalten ist, nur aktiviert werden kann, wenn es in Kontakt mit dem Rohelastomermaterial gebracht wird, das die innerste Schicht des Reifens (1) bildet.

## Revendications

1. Procédé pour fabriquer, mouler et durcir des pneus pour roues de véhicule, comprenant les étapes consistant à :
- fabriquer un pneu non vulcanisé (1) comprenant un matériau élastomère brut ;
- fermer le pneu non vulcanisé (1) dans une cavité de moulage (6) définie dans un moule de vulcanisation (2), ladite cavité de moulage (6) ayant des parois dont la forme correspond à la forme d'une surface extérieure (10) du pneu (1) une fois la vulcanisation achevée ;
- laisser entrer un fluide sous pression dans l'espace défini par une surface intérieure (1b) du pneu (1) afin de presser la surface extérieure (1a) du pneu non vulcanisé contre les parois de la cavité de moulage (6) ;
- appliquer de la chaleur au pneu (1) pour produire la vulcanisation du matériau élastomère brut;
dans lequel, avant l'étape d'admission du fluide sous pression, une étape de traitement de la surface intérieure (1b) du pneu non vulcanisé (1) est exécutée pour munir ladite surface intérieure d'un traitement, adapté pour empêcher la pénétration de fluide sous pression à l'intérieur du pneu lui-même,
**caractérisé en ce que** ledit traitement comprend l'application d'au moins une couche (13) d'un matériau élastomère, ledit matériau élastomère comprenant un système de vulcanisation et une base polymère qui se présente sous la forme d'une émulsion aqueuse et qui est choisie parmi du caoutchouc naturel, du caoutchouc naturel époxydé, du chloroprène, des copolymères acrylonitrile/butadiène, du caoutchouc butyl halogéné, des copolymères styrène/butadiène, des copolymères isobutylène/p-méthylstyrène, des copolymères isobutylène/p-méthylstyrène halogénés, du polybutadiène et leurs mélanges.

2. Procédé selon la revendication 1, dans le quel le système de vulcanisation comprend des dithiocarbamates, des thiurames, des thiazoles ou des mélanges de tels composés.

3. Procédé selon la revendication 1, dans lequel le système de vulcanisation comprend en outre de la N-cyclohexyl-N-éthylamine ou de la diphénylguanidine.

4. Procédé selon la revendication 1, dans lequel l'étape de traitement de la surface intérieure (1b) du pneu non vulcanisé (1) comprend les étapes consistant à : former ladite au moins une couche (13) de matériau élastomère brut sur une surface extérieure d'un support toroïdal (14) dont la forme est sensiblement conjuguée à la forme de la surface intérieure (1b) du pneu, fabriquer le pneu non vulcanisé (1) sur le support toroïdal (14) portant ladite couche (13) de matériau élastomère brut, pré-vulcaniser la couche (13) de matériau élastomère brut avant d'introduire le pneu non vulcanisé (1) dans le moule de vulcanisation (2).

5. Procédé selon la revendication 4, dans lequel la prévulcanisation de la couche élastomère (13) est exécutée, au moins partiellement, pendant la fabrication du pneu (1) sur le support toroïdal (14).

6. Procédé selon la revendication 5, dans lequel la prévulcanisation de la couche élastomère (13) est effectuée en chauffant le support toroïdal (14).

7. Procédé selon la revendication 6, dans lequel le chauffage du support toroïdal (14) est au moins partiellement obtenu suite à l'utilisation du support toroïdal (14) dans un précédent cycle de moulage et de vulcanisation d'un pneu (1).

8. Procédé selon la revendication 1, dans lequel le système de vulcanisation compris dans l'émulsion aqueuse est apte à être actif pendant l'étape de fabrication du pneu non vulcanisé.

9. Procédé selon la revendication 8, dans lequel le système de vulcanisation qui est présent dans l'émulsion aqueuse est complet et donc déjà actif au moment où l'émulsion aqueuse est appliquée sur le support toroïdal (14).

10. Procédé selon la revendication 8, dans lequel le système de vulcanisation qui est contenu dans l'émulsion aqueuse ne peut être activé que lorsqu'il est mis en contact avec le matériau élastomère brut qui compose la couche la plus intérieure du pneu (1).
